# EUROPÄISCHE PATENTSCHRIFT

(11) **EP 0 335 916 B1**
(45) Veröffentlichungstag und Bekanntmachung des Hinweises auf die Patenterteilung: **13.10.1993**
(21) Anmeldenummer: 88903821.2
(22) Anmeldetag: 28.04.1988
(51) Int. Cl.: D21B 1/08

(54) **SCHNECKENPRESSE SOWIE VERFAHREN ZUR HERSTELLUNG VON HANDHABBAREN PRESSLINGEN AUS ABFALLPAPIER**
EXTRUDER AND PROCESS FOR MANUFACTURE OF EASY-TO-HANDLE MOULDED PARTS MADE OF PAPER WASTE
EXTRUDEUSE AINSI QUE PROCEDE POUR LA FABRICATION DE PIECES MOULEES MANIPULABLES EN PAPIER DE REBUT

(30) Priorität: 01.05.1987 DE 3714624
(43) Veröffentlichungstag der Anmeldung: 11.10.1989
(73) Patentinhaber: Alois Pöttinger Maschinenfabrik GmbH, A-4710 Grieskirchen (AT)
(72) Erfinder: PÖTTINGER, Heinrich, A-4710 Grieskirchen (AT); FRAUSCHER, Josef, A-4942 Gurten 50 (AT); GROISBÖCK, Franz, A-4713 Gallspach (AT); LEPOSA, Wolfgang, A-4710 Grieskirchen (AT); PÖCHERSTORFER, Manfred, A-4724 Neukirchen a. W. 60 (AT)
(74) Vertreter: Dupal, Helmut, Dipl-Ing.
(86) Internationale Anmeldenummer: EP8800360
(87) Internationale Veröffentlichungsnummer: WO8808466

(56) Entgegenhaltungen:
- DE-A- 1 813 501
- FR-A- 2 384 060
- US-A- 4 123 489
- US-A- 4 657 192

## Beschreibung

Die Erfindung bezieht sich auf ein Verfahren zur Herstellung von handhabbaren Preßlingen aus Abfallpapier mit den Merkmalen des Oberbegriffes des Anspruches 1, wie es z.B. aus Dokument US-A-4 123 489 bekannt ist.

Bei einem bekannten Verfahren dieser Art wird das bei einem Zerkleinerungsvorgang kleinteilig zerschnittene und zerrissene Abfallpapier im wesentlichen durch Wirkung der Schwerkraft einem Fördervorgang zugeführt, mit dem das Abfallpapier einem Misch-und Verdichtungsvorgang zugeführt wird, während dessen ein Wasserzusatz von zwischen 5 bis 20% zur teilweisen Benetzung der Fasern und zur teilweisen Quellung bzw. Lösung der Leimbindung des Abfallpapiers, je nach Sorte, hinzugefügt wird, wodurch beim Formen der Preßlinge und nach dem wenigstens teilweisen Ausdunsten des Wasserzusatzes und dem Erkalten ein handhabbares Schüttgut erhalten wird.

Die Vorrichtung mit der dieses Verfahren ausgeübt wird, besteht aus einem Zerkleinerer mit an zwei parallelen Wellen angeordneten Schneidscheiben, die gegeneinander und gegen Gegenschneiden abschneiden, die gleichzeitig als Unterstützung der Wellen dienen.

Das zerkleinerte Abfallpapier gelangt durch ein verstellbares Sieb, das nur genügend zerkleinertes Abfallpapier hindurchtreten läßt, das auf einen Zwischenförderer, der das Abfallpapier auf die darunterliegende Schnecke einer Schneckenpresse übergibt, deren Förderteil in einem nach oben offenen Schneckentrog einseitig gelagert läuft und die das kleinteilig zerkleinerte Abfallpapier in ein konisches Mundstück, das am Schneckentrog befestigt ist, fördert, in dem ein konischer Verdichtungsteil der Schnecke läuft, wo das Abfallpapier stark durchmischt und gleichzeitig verdichtet wird, wobei der Wasserzusatz mit einer in das Mundstück eingeschraubten Düse von einer Druckerhöhungspumpe unter hohem Druck erfolgt.

Das Abfallpapier wird zu zylindrischen Preßlingen verformt, die durch eine Öffnung des Mundstückes, zwischen zwei Backen einer Zangenpresse geschoben werden, welche unter dem hebelverstärkten Druck eines pneumatisch betätigten Kraftzylinders gegeneinander gepreßt werden, dessen Preßkraft in Abhängigkeit von der Energieaufnahme des Antriebes der Vorrichtung gesteuert wird und womit der Preßdruck für die Formung der Preßlinge gesteuert wird.

Der Nachteil des genannten Verfahrens liegt darin, daß der Fördervorgang gleichmäßig erfolgen muß, was aber nicht oder ungenügend geschieht, ebenso wie die Zufuhr des zerkleinerten Abfallpapiers aus dem Zerkleinerungsvorgang gleichmäßig sein muß, weil ansonsten die Schwankungen in der Wirkung des Misch-und Verdichtungsvorganges und des Wassergehaltes aus dem Wasserzusatz, der bei Stark schwankenden Fördermengen nicht anpaßbar ist und die Beschaffenheit und Festigkeit der Preßlinge nachteilig beeinflußt wird, hinzu kommt noch eine starke Abhängigkeit der Eigenschaften der Preßlinge von der Art des bearbeiteten Abfallpapiers.

Bei der Vorrichtung zur Ausübung des Verfahrens wird die Durchsatzleistung durch das, nach der Zerkleinerungsvorrichtung angeordnete Sieb, zur Zurückhaltung von zu wenig zerkleinertem Abfallpapier stark herabgesetzt und bedingt hohen zusätzlichen Energieverbrauch und ungleichmäßige Förderung, die durch die Anordnung des Zwischenförderers und den zwangsläufig nach oben für die Zufuhr des zerkleinerten Abfallpapiers offenen Schneckentrog nicht beseitigt werden können.

Schließlich führt der Wasserzusatz im Mundstück der Schneckenpresse, an einer Stelle hohen Preßdruckes zu einem ungleichmäßig auf das Abfallpapier verteilten Wasserzusatz und damit einer schwankenden Festigkeit der geformten Preßlinge.

Aufgabe der Erfindung ist es, das Verfahren nach dem Oberbegriff des Anspruches 1 zu verbessern, um Preßlinge gleichmäßiger Beschaffenheit und gleichbleibender Festigkeit, die für gut handhabbares Schüttgut erforderlich sind, zu erhalten und den Durchsatz des Abfallpapiers zu vergleichmäßigen und eine Vorrichtung zur Durchführung des verbesserten Verfahrens zu schaffen.

Diese Aufgabe wird bei einem Verfahren der eingangs genannten Art mit den Merkmalen des kennzeichnenden Teiles des Anspruches 1 gelöst.

Die Unteransprüche, die gleichzeitig einen Bestandteil der Beschreibung bilden, betreffen besonders vorteilhafte Gestaltungen des Verfahrens und der Vorrichtung zu dessen Ausübung.

Der Wasserzusatz vor dem Misch- und Verdichtungsvorgang, gegen Ende des zweiten Teiles des Fördervorganges ermöglicht einen gleichmäßigen Zusatz und eine gleichmäßige Verteilung des Wassers im Abfallpapier, wobei die Einwirkungszeit des Wassers etwas vergrößert wird, während der Zusatz des Wassers bei stark herabgesetztem geregelten Druck und damit gleichmäßig erfolgen kann.

Gleichzeitig ermöglicht ein Wasserzusatz bei schwer benetzbaren Abfallpapiersorten bereits während des ersten Teiles des Fördervorganges eine bessere Befeuchtung des Abfallpapiers, besonders durch Verlängern der Verweilzeit im Förderbereich und bei gleichzeitiger Gestaltung des ersten Teiles des Fördervorganges eine weiter fortgesetzte Zerkleinerung des Abfallpapiers, wodurch ein vergleichmäßigter Durchsatz und eine verbesserte Beschaffenheit der Preßlinge erreicht wird. Die Anordnung des Zwischenförderers in geringem Abstand unmittelbar oberhalb des Förderteiles der Schneckenpresse, sowie dessen Erstreckung über die gesamte Länge des Förderteiles und der gleichsinnige Antrieb ergibt eine Steigerung und Vergleichmäßigung der Förderleistung dadurch, daß das geförderte Abfallpapier über den gesamten Förderschneckenteil weitergegeben wird und zwischen dem Zwischenförderer, Schnecke und dem Schneckentrog gehalten und dadurch zuverlässig in den Misch- und Preßteil der Schneckenpresse gefördert wird.

Durch die Wahl der gleichen Drehzahl ergibt sich bei etwa gleichen Durchmessern der Fördermittel eine Vergleichmäßigung der Fördergeschwindigkeit des Abfallpapiers.

Der Zwischenförderer soll einen größeren Anteil an radialer Förderung aufweisen, so daß ein mehr axialer Verlauf von Mitnehmern auf einem Kern größeren Durchmessers besonders vorteilhaft ist, wobei die Abmessung von Kern und Mitnehmern, deren Anzahl, sowie deren Abstand voneinander für die Förder-und Nachzerkleinerungswirkung von Bedeutung sind, dergestalt, daß eine höhere Anzahl von Mitnehmern und mehr axialer Verlauf die Schneidwirkung und Radialförderung vergrößern, geringere Gangtiefe besonders die Zerkleinerungswirkung stark vergrößert.

Für besonders starke Nachzerkleinerung und Durchmischung ist die Unterteilung der Mitnehmer in axialer Richtung in Teilmitnehmer, die voneinander beabstandet sind, von großem Vorteil, wobei zusätzliche axiale Ausrichtung der Flächen der Teilmitnehmer die Radialförderung und gekrümmte oder unterschiedlich stark geneigte Flächen die Durchmischung stärker begünstigen und mehr reißende Zerkleinerung begünstigen.

Für hohe, störungsfreie Durchsatzleistungen ist es von Vorteil die Seitenwandungen des Gehäuses möglichst den Konturen des Zwischenförderers anzupassen, damit ein gleichmäßig breiter Spalt entsteht.

Zur Verbesserung der axialen Förderung des Abfallpapiers ist die Anordnung von mehreren axial ausgerichteten, voneinander beabstandeten Führungsteilen sehr günstig. Dabei können die Führungsteile als Vierkantstäbe ausgebildet sein und scharfe Kanten aufweisen und/oder weiter in den Spalt hineinragen, wodurch eine Nachzerkleinerungswirkung erzielbar ist, die mehr schneidend oder zerreissend einstellbar ist. Auf der gegenüberliegenden Seitenwandung dienen die Führungsteile neben der axialen Führungswirkung auch als eine Art von Abstreifer, die die Rückführung von Abfallpapier nach oben vermindern.

Für eine gleichmäßige weitgehende Zerkleinerung ist es vorteilhaft, die Merkmale des Anspruches 11 anzuwenden, wobei Ausgestaltungen nach den Ansprüchen 12 bis 14 vorteilhaft angewendet werden, je nach dem ob mehr die Mahlwirkung oder die Zerreiß- oder die Schneidwirkung für die Zerkleinerung des Abfallpapiers im Vordergrund steht, die sich jeweils nach der Art des Abfallpapiers richtet.

Dabei ist es von Vorteil, wenn die auf Einsatzteilen angebrachten Nachzerkleinerungswerkzeuge mit diesem gegen Federkraft verschwenkbar angeordnet sind, so daß Verstopfungen leichter vermieden oder beseitigt werden können. Eine einfache Anpaßbarkeit der Nachzerkleinerungswerkzeuge an die spezielle Arbeitsweise ist durch die austauschbare Anordnung ermöglicht.

Auf der Seitenwandung, an der der Zwischenförderer nach oben fördert, ist es vorteilhaft Abstreifer anzubringen, welche die Rückführung von Abfallpapier wirksam verhindern.

Die Vorrichtung ist vorteilhafterweise so ausgebildet, daß der Schneckentrog und die Seitenwandungen des Gehäuses des Zwischenförderers mit wenigen Verschraubungen befestigt und dadurch leicht abnehmbar sind und daß sowohl die Schnecke der Schneckenpresse als auch der Zwischenförderer leicht austauschbar nach den Merkmalen des Anspruches 18 ausgebildet sind, so daß die Vorrichtung auf unterschiedliche Abfallpapiersorten rasch abgeändert werden kann, bzw. eine Vorrichtung für eine Reihe von Abfallpapierarten speziell angepaßt ausrüstbar ist.

Da die Vorrichtung bei Überlastung stillgesetzt und zur Beseitigung von Verstopfungen kurzzeitig in der Drehrichtung umgesteuert werden muß, ist es vorteilhaft den Zwischenförderer während des Rücklaufes stillzusetzen, um das Zurückfördern von Abfallpapier,insbesonders in bereits angefeuchtetem Zustand, zu vermeiden, wobei die einfachste Lösung in der Anwendung eines mechanischen Freilaufes besteht.

Für die bessere Aufbereitung des Abfallpapiers ist es von besonderem Vorteil einen Teil des Wasserzusatzes vor oder während der Nachzerkleinerung bzw. während der Förderung im Zwischenförderer zuzusetzen, um die Verweilzweit für das Benetzen, Quellen und/oder Lösen zu vergrößern und damit eine bessere Anpassung an besonders schwer aufschließbare Abfallpapiersorten zu gestatten.

Die Ausbildung der Mitnehmer des Zwischenförderers als Teilmitnehmer, in axial ausgerichteten auf dem Umfang des Kerns des Zwischenförderers versetzt angeordneten Reihen, ergibt die Möglichkeit den gesamten Spalt zwischen dem Kern des Zwischenförderers und den Seitenwandungen des Gehäuses für die Anbringung von Schneid-oder Reißorganen zu nutzen; die Verdrehung der Flächen der Teilmitnehmer ergibt die gewünschte axiale Förderwirkung und versetzt den Schneidbeginn an den beiden Längskanten eines Teilmitnehmers etwas, so daß die auftretenden Schnittkräfte etwas vergleichmäßigt werden.

Der Schneidwinkel zwischen den Längskanten der Teilmitnehmer und der Schneid- oder Reißorgane entlastet die Gehäusewandung von resultierenden Anpreßkräften und vermeidet das Hängenbleiben von Fördergut, das zum Verstopfen führen kann.

Die Verlängerung des Blattes des Schneid-oder Reißorganes bis an den Außenumfang der Schnecke der Schneckenpresse gibt eine wirksame Führung für das zerkleinerte Fördergut und ergibt eine sichere Übergabe des Fördergutes an die Schnecke und trägt damit zu einer gleichmäßigen Arbeit der Maschine bei.

Der Aufbau und die Anbringung der Teilmitnehmer bildet eine Sicherung gegen extreme Belastung, bei der die Teilmitnehmer verformt werden, aber nicht abbrechen und in die Presse gelangen können.

Die Erfindung wird an Hand der Zeichnung nachstehend beschrieben.

Es zeigt:

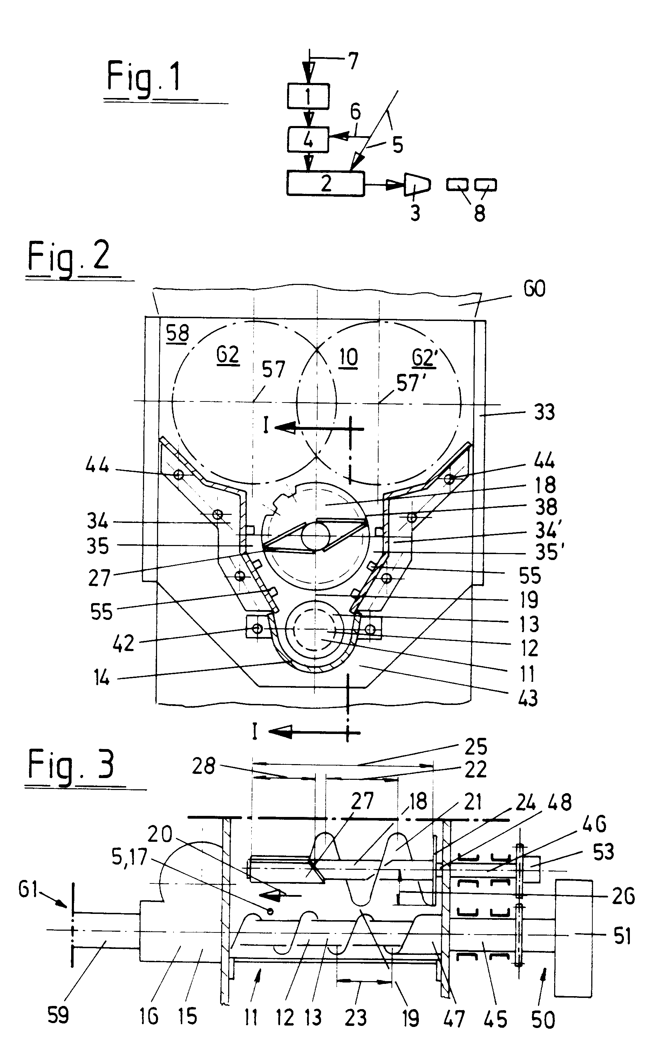

- Fig. 1: ein Schema des Verfahrensverlaufes,
- Fig. 2: eine Vorrichtung zur Ausübung des Verfahrens im Querschnitt, schematisch,
- Fig. 3: einen Ausschnitt der Vorrichtung nach I-I, schematisch,
- Fig. 4: einen Zwischenförderer mit Mitnehmern in Seitenansicht, schematisch,
- Fig. 5: den Zwischenförderer nach Fig.4 im Querschnitt, schematisch,
- Fig. 6: einen Zwischenförderer mit geteilten Mit - nehmern in Seitenansicht, schematisch,
- Fig. 7: zwei Ausführungen eines Zwischenförderers mit zwei Arten und Anordnungen von Mitnehmern in Seitenansicht, schematisch,
- Fig. 8: einen Ausschnitt aus einer Vorrichtung, mit Schneckenpresse und Zwischenförderer mit Nachzerkleinerungswerkzeugen im Querschnitt, schematisch,
- Fig. 9: eine Seitenansicht des Zwischenförderers mit zwei Arten von Mitnehmern nach Fig.8 und eine Draufsicht auf die zwei Arten von Nachzerkleinerungswerkzeugen, schematisch, und
- Fig. 10: Seitenansicht eines Einsatzteiles mit Mahlplatten, geschnitten, schematisch.

Das Verfahren zur Umformung von Abfallpapier 7 in Preßlinge 8, die eine gut handhabbares Schüttgut bilden, umfaßt einen Zerkleinerungsvorgang 1, bei dem das Abfallpapier 7 kleinteilig zerschnitten und zerrissen wird. Das zerkleinerte Abfallpapier 7 wird dann von einem ersten Teil 4 eines Fördervorganges, der gleichzeitig als Nachzerkleinerungsvorgang wirksam wird, in einen zweiten Teil 2 des Fördervorganges übergeben, vor dessen Ende ein Wasserzusatz 5 unter geringem Druck erfolgt, von dem das Abfallpapier 7 an einen Misch- und Verdichtungsvorgang 3 übergeben wird, in dem das benetzte Abfallpapier 7 mit seiner teilweise gequollenen und/oder aufgelösten Leimbindung zu neuer Bindung gebracht wird, durch die die geformten Preßlinge 8 nach dem Auspressen und Ausdunsten eines Teiles des Wasserzusatzes und nach dem Erkalten ein gut handhabbares Schüttgut bilden. Gleichzeitig kann dabei auf dem Abfallpapier vorhandene Information beseitigt werden.

Falls erforderlich wird ein Teil 6 des Wasserzusatzes bereits unmittelbar vor oder während des ersten Teiles 4 des Fördervorganges zugesetzt.

Die Vorrichtung zur Ausübung des Verfahrens umfaßt eine Zerkleinerungsvorrichtung 10 mit zwei Sätzen 62,62' von Messerscheiben, die an zwei parallel zueinander angeordneten Achsen 57,57' auf gegensinnig angetriebenen Wellen teilweise ineinandergreifend in einem Schacht 58 eines Gehäuses 33 gelagert sind, auf das oben ein Einfülltrichter 60 für das Abfallpapier 7 auf die Zerkleinerungsvorrichtung 10 aufgesetzt ist. Nach unten schließt ein Zwischenförderer 18 an, der in geringem Abstand 19 oberhalb des Förderteiles 13 der Schnecke 12 der Schneckenpresse 11 zwischen zwei Seitenwandungen 34,34' unter Bildung eines gleichmäßigen Spaltes 35,35' drehbar einseitig gelagert angeordnet ist. Der Zwischenförderer 18 ist gleichsinnig mit der ebenfalls einseitig gelagerten Schnecke 12 angetrieben und ist als Schnecke 21 ausgeführt, an deren lagerseitigen Ende eine Radialscheibe 24 angebracht ist, während an dem freien Ende zwei radial ausgerichtete Förderpaddel 27 angebracht sind, deren axiale Erstreckung 28 etwa ein Drittel der axialen Länge 25 des Zwischenförderers 18 einnimmt.

In dem Spalt 35 und 35' sind in Abständen voneinander Führungsteile 55 aus Vierkantprofilen angeordnet, die an den Seitenwandungen 34 und 34' befestigt sind und der Förderung des Abfallpapiers 7 in Axialrichtung dienen, wobei die Führungsteile 55 durch den Spalt 35 und 35' bis auf einen geringen Abstand an den Umfang 38 des Zwischenförderers 18 herangeführt sind und eine Nachzerkleinerung des Abfallpapiers 7 an der Seitenwand 35, an der der Zwischenförderer 18 sich nach unten bewegt, unterstützen, während die Führungsteile 55 an der Seitenwand 35',an der der Zwischenförderer 18 sich nach oben bewegt, als Abstreifer wirken. Die unterhalb des Zwischenförderers 18 angeordnete Schneckenpresse 11 besitzt eine Schnecke 12, die einseitig gelagert, mit ihrem Förderteil 13 in einem nach oben offenen Schneckentrog 14 gleichsinnig mit dem Zwischenförderer 18 und mit gleicher Drehzahl umläuft und in der gleichen Richtung gewendelt ist, so daß die Förderrichtung 20 übereinstimmt und der Zwischenförderer 18 die Förderwirkung des Förderteiles 13 der Schnecke 12 unterstützt.

Die Schnecke 12 weist am freien Ende einen konischen Misch- und Verdichtungsteil 15 auf, der in einem konischen Mundstück 16 angeordnet ist, in dem das Abfallpapier stark durchmischt und stark verdichtet wird, nachdem bereits vor dem Ende des Förderteiles 13 in dessen oberen Bereich der Wasserzusatz 5 durch eine Düse 17 unter geringem Druck eingespritzt wird, so daß es benetzt und die Leimbindung gelöst und im konischen Mundstück 16 wieder neu verbunden wurde. Durch das konische Mundstück 16 treten die geformten Preßlinge 8 zwischen die Backen 59 einer unmittelbar anschließenden Zangenpresse 61 , mit der der Preßdruck der Schneckenpresse 11 gesteuert wird und aus der die Preßlinge 8 in einen Behälter abgegeben werden.

Der Zwischenförderer 18 besitzt eine Schnecke 21, deren Ganghöhe 22 mit der Ganghöhe 23 des Förderteiles 13 übereinstimmt und dessen Ganghöhe 22 und Gangtiefe 26 einem Mehrfachen der Teilchengröße des zerkleinerten Abfallpapiers 7 entspricht. Die axiale Länge 25 des Zwischenförderers 18 entspricht etwa der axialen Länge des Förderteiles 13.

Zwischenförderer 18 und Schnecke 12 sind von einem gemeinsamen Antrieb 50 über ein Untersetzungsgetriebe 51 angetrieben, wobei der Zwischenförderer 18 über einen mechanischen Freilauf 53 angekoppelt ist, so daß bei Rücklauf der Schnecke 12 wegen Überlastung der Schneckenpresse 11 oder der Vorrichtung der Zwischenförderer 18 stillgesetzt ist, so daß kein Abfallpapier 7, besonders in angefeuchtetem Zustand, in den Zwischenförderer 18 und weiter in den Raum darüber, zurückgefördert werden kann.

Der Zwischenförderer 18 ist für die Verarbeitung stärker geleimter und verdichteter Abfallpapiersorten mit stark axial ausgerichteten Mitnehmern 30 versehen, die auf einem Kern 31 angeordnet sind, dessen Halbmesser ein Mehrfaches der Gangtiefe 26 beträgt. Diese Anordnung verstärkt die Radialförderung und zusammen mit Nachzerkleinerungswerkzeugen 36 die weitere Zerkleinerung des Abfallpapiers 7.

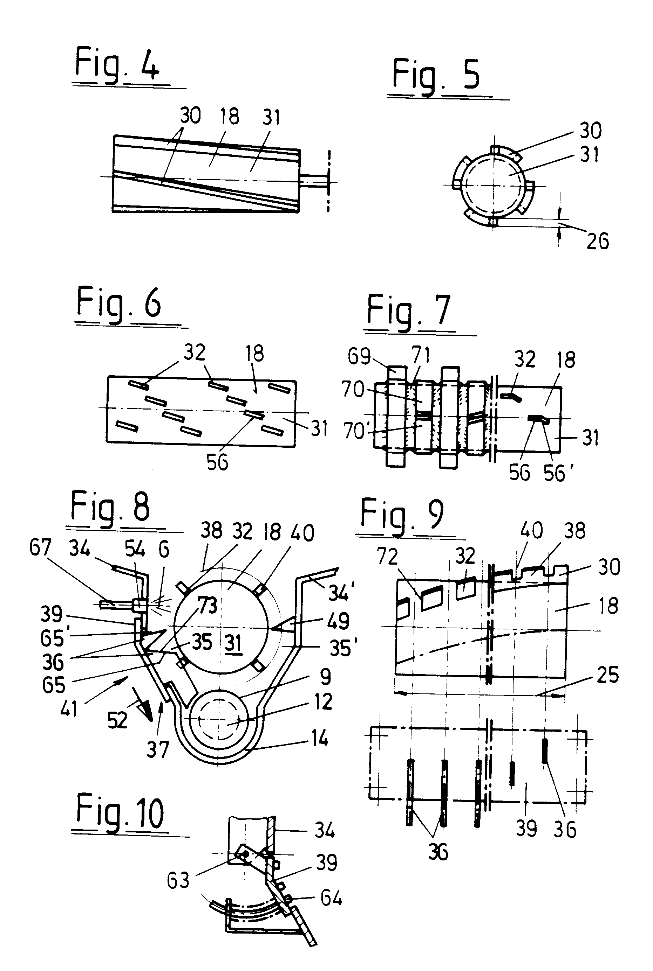

Für eine gleichzeitig stärkere Reißwirkung und Durch - mischung sind die Mitnehmer 30 in beabstandete Teilmitnehmer 32 unterteilt, deren Flächen 56,56' stärker axial ausgerichtet sind als die Anordnung der Teilmitnehmer 32 auf dem Kern 31 des Zwischenförderers 18 in Fig.6.

Eine besonders starke Nachzerkleinerungswirkung wird mit Teilmitnehmern 32 erzielt, deren Flächen in zwei Flächen 56,56' mit unterschiedlich starker axialer Ausrichtung geteilt sind.

Bei einer anderen Ausführungsform der Teilmitnehmer 32 sind diesein zwei Reihen 69,69' in axialer Richtung auf dem Kern 31 des Zwischenförderers 18 angebracht und mit ihren Flächen 56 gegen die axiale Richtung verdreht. Dabei sind die Teilmitnehmer 32 aufeinanderfolgend in axialer Richtung abwechselnd um 90 Winkelgrade versetzt angeordnet.

Die Teilmitnehmer 32 bestehen aus zwei Teilen 70,71, die gegeneinandergestellt sind und mit Befestigungsflächen 71 auf dem Kern 31 aufliegend aufgeschraubt oder aufgeschweißt sind, oder aus einem einzigen entsprechend gefalteten Teil.

Zur intensiven Nachzerkleinerung des Abfallpapiers 7 ist die Seitenwandung 34 an der der Zwischenförderer 18 eine Förderrichtung 52 in Richtung auf die Schnecke 12 aufweist, mit einer Öffnung 37 für ein Einsatzteil 39 versehen, das mit seinen Nachzerkleinerungswerkzeugen 36 durch den Spalt 35 hindurch in Ausnehmungen 40 am Umfang 38, das heißt in den Mitnehmern 30 des Zwischenförderers 18 greift. Die Nachzerkleinerungswerkzeuge 36 sind über einen kleinen Teil 41 des Umfanges 38 gleichzeitig wirksam. Bei Anwendung von messerförmigen Nachzerkleinerungswerkzeugen 36 sind diese in Reihen in Förderrichtung 52 über die axiale Länge 25 des Zwischenförderers 18 beabstandet versetzt angeordnet.

Der Einsatzteil 39 ist an der Öffnung 37 verschraubt oder gegen Federkraft um die Achse 63 verschwenkbar gelagert und gegen Einsatzteile 39 mit anderen Nachzerkleinerungswerkzeugen 36, beispielsweise mit Mahlorganen in Form von Platten 64, austauschbar. Unmittelbar oberhalb des Einsatzteiles 39 ist eine Düse 54 in der Seitenwandung 34 verschraubt, durch die ein Teil 6 des Wasserzusatzes 5 eingespritzt wird.

Die Nachzerkleinerungswerkzeuge 36 bestehen wie in Fig.8 und 9 ersichtlich, aus Schneid- oder Reißorganen 65, die in einer Reihe eingesetzt in einen von den Teilmitnehmern 32 gebildeten Radialspalt 68 bis an den Kern 31 des Zwischenförderers 18 reichen. Dabei bilden die Schneidkanten 73 der Schneid-oder Reißorgane 65 mit den Teilmitnehmern 32 einen Schneidwinkel, der sich in Richtung auf den Kern 31 hin öffnet.

Das Blatt jedes Schneid- oder Reißorganes 65 ist mit der Schneidkante 73 etwa tangential zum Umfang des Kerns 31 verlaufend, bis an den Außenumfang 9 der Schnecke 12 der Schneckenpresse 11 verlängert und überdeckt, eine Führung bildend, den Abstand bis zur Gehäusewand und den Schneckentrog 14.

An der Seitenwandung 34', an der die Förderrichtung 52 des Zwischenförderers 18 nach oben weist, sind Abstreifer 49 angebracht, die den Spalt 35' überbrücken und in die Ausnehmung 40 am Umfang 38 des Zwischenförderers ragen.

Der Schneckentrog 14 ist mit einigen wenigen Verschraubungen 42 und die Seitenwandungen 34,34' mit einigen wenigen Verschraubungen 44 am Rahmen 43 der Vorrichtung befestigt und leicht abnehmbar.

Die Antriebswellen 45 und 46 der Schnecke 12 und des Zwischenförderers 18 sind über Zwischenwelle 47 und 48 mit der Schnecke 12 und dem Zwischenförderer 18 drehfest koppelbar angeordnet, so daß auch das Wechseln von Schnecke 12 und Zwischenförderer 18 in einfacher Weise möglich ist.

### Legende :

- 1: Zerkleinerungsvorgang
- 2: zweiter Teil des Fördervorganges
- 3: Misch-und Verdichtungsvorgang
- 4: erster Teil des Fördervorganges
- 5: Wasserzusatz
- 6: Teil des Wasserzusatzes
- 7: Abfallpapier
- 8: Preßling
- 9: Außenumfang der Schnecke 12
- 10: Zerkleinerungsvorrichtung
- 11: Schneckenpresse
- 12: Schnecke
- 13: Förderteil der Schnecke 12
- 14: Schneckentrog
- 15: konischer Misch-und Verdichtungsteil der Schnecke 12
- 16: konisches Mundstück
- 17: Düse
- 18: Zwischenförderer
- 19: Abstand zwischen Zwischenförderer 18 und Förderteil 13
- 20: Förderrichtung von Zwischenförderer 18 und Förderteil 13
- 21: Schnecke
- 22: Canghöhe der Schnecke 21
- 23: Ganghöhe des Förderteiles 13
- 24: Radialscheibe der Schnecke 21
- 25: axiale Länge des Zwischenförderers 18
- 26: Gangtiefe des Zwischenförderers 18
- 27: Förderpaddel
- 28: axiale Erstreckung des Förderpaddels 27
- 29: axiale Länge des Förderteiles 13
- 30: Mitnehmer des Zwischenförderers 18
- 31: Kern des Zwischenförderers 18
- 32: Teilmitnehmer der Mitnehmer 30
- 33: Gehäuse des Zwischenförderers 18
- 34,34': Seitenwandungen
- 35,35': Spalt
- 36: Nachzerkleinerungswerkzeug
- 37: Öffnung in der Seitenwandung 34
- 38: Außenumfang des Zwischenförderers 18
- 39: Einsatzteil
- 40: Ausnehmungen am Umfang 38
- 41: Teil des Umfanges 38
- 42: Verschraubungen des Schneckentroges 14
- 43: Rahmen der Vorrichtung
- 44: Verschraubungen der Seitenwandungen 34,34'
- 43: Antriebswelle der Schnecke 12
- 46: Antriebswelle des Zwischenförderers 18
- 47: Zwischenwelle der Schnecke 12
- 48: Zwischenwelle des Zwischenförderers 18
- 49: Abstreifer
- 50: Antrieb gemeinsam für Schnecke 12 und Zwischenförderer 18
- 51: Untersetzungsgetriebe
- 52: Förderrichtung
- 53: mechanischer Freilauf
- 54: Düse des Zwischenförderers 18
- 55: Führungsteil
- 56,56': Fläche des Teilmitnehmers 32
- 57,57': Achsen der Messerscheiben 62,62'
- 58: Schacht
- 59: Backen
- 60: Einfülltrichter
- 61: Zangenpresse
- 62,62': Satz von Messerscheiben
- 63: Achse des Einsatzteiles 39
- 64: Mahlorgane in Form von Platten
- 65,65': Schneid-oder Reißorgane
- 66: Feder
- 67: Zuleitung
- 68: Radialspalt
- 69,69': Reihen von Teilmitnehmern 32
- 70,70': Teile des Teilmitnehmers 32
- 71: Befestigungsfläche des Teiles 70,70'
- 72: Längskanten der Teilmitnehmer 32
- 73: Schneidkante des Schneid-oder Reißorganes 65
- 74: Messerblatt des Schneid-oder Reißorganes 65
- 75: Schneidspalt

## Patentansprüche

1. Fortlaufendes Verfahren zur Herstellung von handhabbaren Preßlingen aus Abfallpapier, das einen Zerkleinerungsvorgang zum kleinteiligen Zerschneiden und Zerreißen des Abfallpapiers umfaßt, an den sich ein Fördervorgang anschließt, der geteilt ist und aus einem ersten Teil (4) des Fördervorganges der dem Zerkleinerungsvorgang (1) nachgeschaltet ist und einem zweiten Teil (2) des Fördervorganges besteht, von dem das Abfallpapier einem Misch- und Verdichtungsvorgang zugeführt wird, bei einem Wasserzusatz unter Druck von 5 bis 20 Gewichtsprozent im Verfahren, der die Fasern des Abfallpapiers teilweise aufquellen und voneinander lösen läßt, wodurch während des Verdichtungsvorganges neue Bindungen des Abfallpapiers herstellbar sind, die den Zusammenhalt der Preßlinge nach dem Formen und nach dem wenigstens teilweisen Ausdunsten des Wasserzusatzes und dem Erkalten verbessert, damit diese ein handhabbares Schüttgut bilden, dadurch gekennzeichnet, daß der Wasserzusatz (5) während des zweiten Teiles (2) des Fördervorganges gegen dessen Ende zu, unmittelbar vor dem Misch- und Verdichtungsvorgang (3) erfolgt, während zumindest bei schwer benetzbarem Abfallpapier ein Teil (6) des Wasserzusatzes (5) bereits vor oder während des ersten Teiles (4) des Fördervorganges erfolgt, in dessen Verlauf das zerkleinerte Abfallpapier einem zusätzlichen Nachzerkleinerungsvorgang unterworfen ist.

2. Fortlaufendes Verfahren zur Herstellung von handhabbaren Preßlingen aus Abfallpapier nach dem vorhergehenden Anspruch, dadurch gekennzeichnet, daß der Wasserzusatz (5) und dessen Teil (6) für den Zusatz beim ersten Teil (4) des Fördervorganges mit einem vom Druck der Netzwasserleitung herabgesetzten und geregelten Wasserdruck von 1,5 bis 2,5 bar erfolgt.

3. Vorrichtung zur Durchführung des Verfahrens nach Anspruch 1 und 2, mit einer Zerkleinerungsvorrichtung, aus der das kleinteilig zerschnittene und zerrissene Abfallpapier, unter Zwischenschaltung eines Zwischenförderers (18), einer Schneckenpresse (11) zugeführt wird, deren Schnecke (12) in einem offenen Schneckentrog (14) einseitig gelagert umläuft und einen Förderteil (13) und einen konischen Misch- und Verdichtungsteil (15) in einem konischen Mundstück (16) angeordnet umfaßt und bei welcher Vorrichtung der Wasserzusatz (5) über eine Düse (17) unter Druck auf das Abfallpapier (7) eingespritzt wird, nach Anspruch 1 oder 2, dadurch gekennzeichnet, daß die Düse (17) für den Wasserzusatz (5) unmittelbar vor dem Mundstück (16) in der Wand des Schneckentroges (14) gegen Ende des Förderteiles (13) der Schnecke (12) der Schneckenpresse (11) angeordnet ist, während ein Teil (6) des Wasserzusatzes (5) erforderlichenfalls durch eine Düse (54) im Bereich des Zwischenförderers (18), der zwischen der Zerkleinerungsvorrichtung (10) und dem Förderteil (13) der Schnecke (12) angeordnet ist, erfolgt, wobei der Zwischenförderer (18) welcher gleichzeitig eine Nachzerkleinerungs vorrichtung bildet, in geringem Abstand (19) oberhalb des Förderteiles (13) der Schnecke (12) achsparallel zu dieser angeordnet, gleichsinnig antreibbar gelagert ist und zum Förderteil (13) der Schnecke (12) fördernd im wesentlichen über dessen gesamte Länge (29) reicht.

4. Vorrichtung nach Anspruch 3, dadurch gekennzeichnet, daß der Zwischenförderer (18) im wesentlichen mit der gleichen Drehzahl angetrieben wird wie der Förderteil (13).

5. Vorrichtung nach einem der Ansprüche 3 oder 4, dadurch gekennzeichnet, daß der Zwischenförderer (18) für einen größeren Anteil an radialer Förderung des zerkleinerten Abfallpapiers (7) mit im wesentlichen axial verlaufenden Mitnehmern (30) ausgestattet ist.

6. Vorrichtung nach einem der Ansprüche 3 bis 5, dadurch gekennzeichnet, daß der Zwischenförderer (18) mit Mitnehmern (30) versehen ist, die in seiner axialen Richtung in voneinander beabstandete Teilmitnehmer (32) unterteilt sind, die in die axiale Richtung des Zwischenförderers (18) ausgerichtet sind, wobei die Flächen (56) der Teilmitnehmer (32) in sich gekrümmt sind oder jeweils abschnittsweise in unterschiedlicher Anstellung zur Axialrichtung verlaufen.

7. Vorrichtung nach einem der Ansprüche 3 bis 6, dadurch gekennzeichnet, daß der Zwischenförderer (18) in einem Gehäuse (33) angeordnet ist, das Seitenwandungen (34,34') aufweist, die den Konturen des Zwischenförderers (18) wenigstens im Groben folgen und einen im wesentlichen gleichbleibenden Spalt (35,35') zwischen Seitenwandungen (34 und 34') und dem Zwischenförderer (18) bilden.

8. Vorrichtung nach dem vorhergehenden Anspruch, dadurch gekennzeichnet, daß in dem Spalt (35,35') an den Seitenwandungen (34,34') jeweils mehrere in Abständen angeordnete, sich in axialer Richtung erstreckende Führungsteile (55), vorzugsweise Vierkantprofilstäbe, befestigt sind, die den Spalt (35,35') wenigstens teilweise überbrücken.

9. Vorrichtung nach Anspruch 7 oder 8, dadurch gekennzeichnet, daß an der Seitenwandung (34), an der der Zwischenförderer (18) nach unten in Richtung auf den Förderteil (13) zu fördert, Nachzerkleinerungswerkzeuge (36) vorgesehen sind, die in eine Öffnung (37) in der Seitenwandung (34) einsetzbar sind, die aus Schneid-oder Reißorganen (65) oder Mahlorganen (64) bestehen, die mit dem Umfang (38) des Zwischenförderers (18), vorzugsweise über dessen gesamte axiale Länge (25), vorzugsweise mit dort angebrachten Gegenwerkzeugen, zusammenarbeiten.

10. Vorrichtung nach einem der Ansprüche 7 bis 9, dadurch gekennzeichnet, daß die Nachzerkleinerungswerkzeuge (36) auf einem Einsatzteil (39) zusammengefaßt angebracht sind.

11. Vorrichtung nach einem der Ansprüche 7 bis 10, dadurch gekennzeichnet, daß die Nachzerkleinerungswerkzeuge (36) in den Außenbereich des Umfanges (38) des Zwischenförderers (18) und zwar in Ausnehmungen (40) der Mitnehmer (30) eingreifen.

12. Vorrichtung nach einem der Ansprüche 7 bis 11, dadurch gekennzeichnet, daß die Nachzerkeinerungswerkzeuge (36) mit dem Umfang (38) des Zwischenförderers (18) einen einstellbaren Spalt (35) bilden, der kleiner ist, vorzugsweise wesentlich kleiner ist, als der Teilchengröße des von der Zerkleinerungsvorrichtung (10) zerkleinerten Abfallpapiers (7) entspricht.

13. Vorrichtung nach Anspruch 10, dadurch gekennzeichnet, daß der Einsatzteil (39) an der Seitenwandung (34) gegen Federkraft aus dem Spalt (35) zurückweichend gelagert ist und vorzugsweise mit verschiedenen Nachzerkleinerungswerkzeugen (36) untereinander wahlweise austauschbar in die Seitenwandung (34) einsetzbar ist.

14. Vorrichtung nach einem der Ansprüche 7 bis 9, dadurch gekennzeichnet, daß an der Seitenwandung (34'), an der der Zwischenförderer (18) nach oben fördert, Abstreifer (49) für das Abfallpapier (7) angebracht sind.

15. Vorrichtung nach Anspruch 3, dadurch gekennzeichnet, daß die Schneckenpresse (11) einen Schneckentrog (14) umfaßt, der mit wenigen Verschraubungen (42) am Rahmen (43) befestigt ist, dem das Gehäuse (33) des Zwischenförderers (18) aufgesetzt ist, dessen Seitenwandungen (34,34') ebenfalls mit wenigen Verschraubungen (44) am Rahmen (43) befestigt sind, so daß die Schnecke (12) und/oder der Zwischenförderer (18) leicht zugänglich sind.

16. Vorrichtung nach einem der Ansprüche 7 bis 9 oder 15, dadurch gekennzeichnet, daß in der Seitenwandung (34) an der der Zwischenförderer (18) in Richtung auf die Schnecke (12) fördert, vor oder zwischen den Nachzerkleinerungswerkzeugen (36) eine Düse (54) zum Einspritzen eines Teiles (6) des Wasserzusatzes (5) angebracht ist.

17. Vorrichtung nach einem der Ansprüche 1 oder 16, dadurch gekennzeichnet, daß in der Wand des Schneckentroges (14) gegen Ende des Förderteiles (13) der Schnecke (12), vor dem konischen Mundstück (16) und im oberen Bereich des Förderteiles (13) eine Düse (17) zum Einspritzen des Wasserzusatzes (5) eingeschraubt ist.

18. Vorrichtung nach einem der Ansprüche 3 bis 7, 9 oder 11 bis 13 oder 15 bis 18, dadurch gekennzeichnet, daß der Zwischenförderer (18) mit Teilmitnehmern (32) versehen ist, die in axialer Richtung des Zwischenförderers (18) einen Radialspalt (68) für die Nachzerkleinerungswerkzeuge (36) auf ihrer Bewegungsbahn bildend, beabstandet auf dem Kern (31) angebracht sind.

19. Vorrichtung nach Anspruch 18, dadurch gekennzeichnet, daß die Teilmitnehmer (32) in mehreren, über den Kern (31) regelmäßig verteilten, in axialer Richtung verlaufenden Reihen (69,69') angebracht sind, wobei vorzugsweise zwei Reihen mit einander gegenüberliegenden Teilmitnehmern (32) in axialer Richtung abwechselnd um 90° versetzt sind und deren Flächen 56 zur axialen Richtung verdreht ausgerichtet sind.

20. Vorrichtung nach Anspruch 18 oder 19, dadurch gekennzeichnet, daß jeder Teilmitnehmer (32) aus zwei Teilen (70,70') besteht, oder aus einem Teil zusammengefaltet aufgebaut ist, der oder die mit einer, an den Kern (31) angepaßten Befestigungsfläche (71) auf diesem verschraubt oder verschweißt ist oder sind.

21. Vorrichtung nach Anspruch 9, dadurch gekennzeichnet, daß die Schneid-oder Reißorgane (65) bis an den Kern (31) heranreichen und deren Schneidkanten (73) einen Scherwinkel mit den Längskanten (72) der Teilmitnehmer (32) bilden, der sich in Richtung auf den Kern (31) öffnet.

22. Vorrichtung nach Anspruch 9 oder 21, dadurch gekennzeichnet, daß die Schneid-oder Reißorgane (65) von ihrer Schneidkante (73) etwa tangential zum Umfang des Kerns (31) verlaufend bis an den Außenumfang (9) der Schnecke (12) der Schneckenpresse (11) bis auf einen geringen Schneidspalt (75) bildend heranreichen und vorzugsweise den Spalt (35) oder den Abstand bis zur Gehäusewand des Schneckentroges (14) mit dem Messerblatt (74) im wesentlichen überdecken.

23. Vorrichtung nach einem der Ansprüche 9, 21 oder 22, dadurch gekennzeichnet, daß mehrere Reihen von Schneid-oder Reißorganen (65) vorgesehen sind, die auch in Förderrichtung (52) versetzt sind.

## Claims

1. Continuous process for the manufacture of easy-to-handle mouldings from waste paper, said process comprising a comminuting process for cutting and tearing the waste paper into small pieces, followed by a conveying process which is divided and consists of a first stage (4) of the conveying process which is placed downstream of the comminuting process (1) and a second stage (2) of the conveying process, from which the waste paper is supplied to a mixing and compressing process, a quantity of water amounting to 5 to 20 per cent by weight being added under pressure in the process, which makes the fibres of the waste paper partially swell up and separate from one another, as a result of which new bonds of the waste paper can be produced during the compressing process, said bonds improving the cohesion of the mouldings after forming and after the at least partial evaporation of the added quantity of water and after cooling, so that said mouldings form an easy-to-handle bulk material, characterised in that the quantity of water (5) is added during the second stage (2) of the conveying process and towards the end thereof, immediately before the mixing and compressing process (3), while at least in the case of waste paper that is difficult to moisten a part (6) of the added quantity of water (5) is added prior to or during the first stage (4) of the conveying process, in the course of which the comminuted waste paper is subjected to an additional after-comminution process.

2. Continuous process for the manufacture of easy-to-handle mouldings from waste paper according to the preceding Claim, characterised in that the quantity of water (5) and the part thereof (6) for addition during the first stage (4) of the conveying process is added at a regulated water pressure reduced from the pressure of the mains water supply amounting to 1.5 to 2.5 bar.

3. Device for implementing the process according to Claims 1 and 2, comprising a comminution device from which the waste paper cut and torn into small pieces is supplied to a worm extruder (11) subject to an intermediate conveyor (18) being interposed, the worm (12) of said extruder revolving, supported on one side, in an open worm trough (14) and comprising a conveying section (13) and a conical mixing and compressing section (15) arranged in a conical mouthpiece (16) and with which device the added quantity of water (5) is injected via a nozzle (17) under pressure onto the waste paper (7) in accordance with Claim 1 or 2, characterised in that the nozzle (17) for the added quantity of water (5) is arranged immediately in front of the mouthpiece (16) in the wall of the worm trough (14) towards the end of the conveying section (13) of the worm (12) of the extruder (11), while a part (6) of the added quantity of water (5) is added if necessary through a nozzle (54) in the region of the intermediate conveyor (18) which is arranged between the comminution device (10) and the conveying section (13) of the worm (12), whereby the intermediate conveyor (18), which at the same time constitutes an after-comminution device, is arranged a short distance (19) above the conveying section (13) of the worm (12) on a parallel axis to the latter and has a bearing so as to be capable of being driven in the same direction and reaches as far as the conveying section (13) of the worm (12), feeding essentially over the entire length (29) of said conveying section.

4. Device according to Claim 3, characterised in that the intermediate conveyor (18) is essentially driven at the same rotational speed as the conveying section (13).

5. Device according to one of Claims 3 or 4, characterised in that the intermediate conveyor (18) is equipped for a relatively high proportion of radial feeding of the comminuted waste paper (7) with carriers (30) which essentially run in the axial direction.

6. Device according to one of Claims 3 to 5, characterised in that the intermediate conveyor (18) is provided with carriers (30) which are subdivided in its axial direction into partial carriers (32) spaced from one another and which are oriented in the axial direction of the intermediate conveyor (18), whereby the surfaces (56) of the partial carriers (32) are curved into themselves or in each case consist of sections inclined at differing angles to the axial direction.

7. Device according to one of Claims 3 to 6, characterised in that the intermediate conveyor (18) is arranged in a casing (33) which has side walls (34,34') which follow the contours of the intermediate conveyor (18) at least roughly and form a gap (35,35') between side walls (34 and 34') and the intermediate conveyor (18) which remains substantially constant.

8. Device according to the preceding Claim, characterised in that in the gap (35,35') on the side walls (34,34') there are mounted in each case several spaced guide parts (55), preferably rods of square cross-section, extending in the axial direction, which span the gap (35,35') at least partially.

9. Device according to Claim 7 or 8, characterised in that on the side wall (34) on which the intermediate conveyor (18) feeds downwards in the direction of the conveying section (13) there are provided after-comminution tools (36) which can be inserted in an opening (37) in the side wall (34) and which consist of cutting or tearing devices (65) or grinding devices (64) which cooperate with the periphery (38) of the intermediate conveyor (18), preferably over the entire axial length thereof (25), preferably with opposing tools mounted there.

10. Device according to one of Claims 7 to 9, characterised in that the after-comminution tools (36) are mounted together on an insert (39).

11. Device according to one of Claims 7 to 10, characterised in that the after-comminution tools (36) interlock in the outer region of the periphery (38) of the intermediate conveyor (18), in particular in recesses (40) of the carriers (30).

12. Device according to one of Claims 7 to 11, characterised in that the after-comminution tools (36) form together with the periphery (38) of the intermediate conveyor (18) an adjustable gap (35) which is smaller, preferably significantly smaller, than that corresponding to the particle size of the waste paper (7) which has been comminuted by the comminution device (10).

13. Device according to Claim 10, characterised in that the insert (39) on the side wall (34) is mounted so as to be pressed back by the force of a spring from the gap (35) and can preferably be inserted in the side wall (34) with various after-comminution tools (36) which can be mutually interchanged at will.

14. Device according to one of Claims 7 to 9, characterised in that on the side wall (34') against which the intermediate conveyor (18) feeds upwards there are mounted strippers (49) for the waste paper (7).

15. Device according to Claim 3, characterised in that the worm extruder (11) comprises a worm trough (14) which is fastened with a small number of screw joints (42) to the frame (43) on which the casing (33) of the intermediate conveyor (18) is mounted, the side walls (34,34') of which casing are likewise fastened with a small number of screw joints (44) to the frame (43), so that the worm (12) and/or the intermediate conveyor (18) are easily accessible.

16. Device according to one of Claims 7 to 9 or 15, characterised in that in the side wall (34), against which the intermediate conveyor (18) feeds in the direction of the worm (12), a nozzle (54) for injecting a part (6) of the added quantity of water (5) is mounted in front of or between the after-comminution tools (36).

17. Device according to one of Claims 1 or 16, characterised in that in the wall of the worm trough (14) towards the end of the conveying section (13) of the worm (12), in front of the conical mouthpiece (16) and in the upper region of the conveying section (13) there is screwed a nozzle (17) for the purpose of injecting the added quantity of water (5).

18. Device according to one of Claims 3 to 7, 9 or 11 to 13 or 15 to 18, characterised in that the intermediate conveyor (18) is provided with partial carriers (32) which, forming in the axial direction of the intermediate conveyor (18) a radial gap (68) for the after-comminution tools (36) on their trajectory, are mounted at intervals on the core (31).

19. Device according to Claim 18, characterised in that the partial carriers (32) are mounted in several rows (69,69') distributed evenly over the core (31) and running in the axial direction, whereby preferably two rows are alternately offset by 90° with partial carriers (32) situated opposite each other in the axial direction and the surfaces (56) thereof are aligned at an angle in relation to the axial direction.

20. Device according to Claim 18 or 19, characterised in that each partial carrier (32) consists of two parts (70,70') or is constructed from one part folded together, said parts or part being screwed or welded together with a mounting surface (71) adapted to the core (31).

21. Device according to Claim 9, characterised in that the cutting or tearing devices (65) reach as far as the core (31) and the cutting edges (73) thereof form a shear angle with the longitudinal edges (72) of the partial carriers (32), said angle opening in the direction of the core (31).

22. Device according to Claim 9 or 21, characterised in that the cutting or tearing devices (65), running from their cutting edge (73) roughly tangential to the periphery of the core (31) reach almost as far as the outer periphery (9) of the worm (12) of the extruder (11), leaving a small cutting gap (75), and preferably substantially overlap the gap (35) or the distance to the casing wall of the worm trough (14) with the knife blade (74).

23. Device according to one of Claims 9, 21 or 22, characterised in that several rows of cutting or tearing devices (65) are provided which are also positioned in the conveying direction (52).

## Revendications

1. Procédé continu pour la fabrication de pièces moulées manipulables en papier de rebut, qui comprend une étape de déchiquetage pour la découpe en menus fragments et l'arrachement de papier de rebut, à la suite de laquelle est prévue une étape de transport qui est subdivisée en une première partie (4) qui fait suite à l'étape de déchiquetage (1) et en une seconde partie (2) pendant laquelle le papier de rebut est soumis à une étape de mélange et de compactage, avec adjonction d'eau sous pression de 5 à 20 % en poids dans le procédé, qui fait gonfler partiellement et se dégager les unes des autres les fibres du papier de rebut, une nouvelle liaison du papier de rebut pouvant être réalisée pendant l'étape de compactage qui améliore la tenue des pièces moulées après formage et après au moins une évaporation partielle de l'eau ajoutée et refroidissement, de manière à former un produit en vrac manipulable, caractérisé en ce que l'eau ajoutée (5) pendant la seconde partie (2) de l'étape de transport est ajoutée à la fin de celle-ci directement avant l'étape de mélange et de compactage (3), alors que lorsqu'il s'agit au moins d'un papier de rebut fortement mouillable, une partie (6) de l'eau ajoutée (5) est ajoutée avant ou pendant la première partie (4) de l'étape de transport, suite à quoi le papier de rebut déchiqueté est soumis à une étape de déchiquetage complémentaire.

2. Procédé continu pour la fabrication de pièces moulées manipulables en papier de rebut selon la revendication 1, caractérisé en ce que l'eau ajoutée (5) et sa partie (6) qui est ajoutée pendant la première partie (4) de l'étape de transport a lieu sous une pression de 1,5 à 2,5 bars régulée et réduite par rapport à la pression de la conduite d'eau du réseau.

3. Dispositif pour la mise en oeuvre du procédé selon les revendications 1 et 2, comprenant un dispositif de déchiquetage par lequel le papier de rebut est découpé et déchiqueté et dirigé vers une extrudeuse (11) avec interposition d'un convoyeur intermédiaire (18), extrudeuse dont la vis (12) qui est montée sur un côté tourne dans une auge ouverte (14) et qui comprend une partie transporteuse (13) et une partie conique de mélange et de compactage (15) dans un élément de sortie conique (16), l'eau ajoutée (5) étant pulvérisée sous pression par une buse (17) sur le papier de rebut (7) dans ce dispositif, caractérisé en ce que la buse (17) destinée à l'eau ajoutée (5) est montée directement avant l'élément de sortie (16) dans la paroi de l'auge (14) de la vis près de l'extrémité de la partie transporteuse (13) de la vis (12) de l'extrudeuse (11), une partie (6) de l'eau (5) étant ajoutée en cas de besoin par une buse (54) dans la région du convoyeur intermédiaire (18), qui est disposé entre le dispositif de déchiquetage (10) et la partie transporteuse (13) de la vis (12), le transporteur intermédiaire (18) qui forme simultanément un dispositif de déchiquetage complémentaire étant monté au-dessus de la partie transporteuse (13) de la vis (12) et parallèlement à son axe, de façon à tourner dans le même sens et de façon qu'il s'étende sensiblement sur la totalité de la longueur (29) de la partie transporteuse (13) de la vis (12).

4. Dispositif selon la revendication 3, caractérisé en ce que le convoyeur intermédiaire (18) est entraîné sensiblement selon la même vitesse de rotation que la partie transporteuse (13).

5. Dispositif selon la revendication 3 ou 4, caractérisé en ce que le convoyeur intermédiaire (18) est équipé d'éléments d'entraînement (30) orientés sensiblement en direction axiale sur une partie importante du transport radial du papier de rebut (7) déchiqueté.

6. Dispositif selon l'une quelconque des revendications 3 à 5, caractérisé en ce que le convoyeur intermédiaire (18) est muni d'éléments d'entraînement (30) qui sont subdivisés dans leur direction axiale en éléments d'entraînement partiels (32) situés à distance les uns des autres, qui sont orientés dans la direction axiale du convoyeur intermédiaire (18), les surfaces (56) des éléments d'entraînement partiels (32) étant coudées ou disposées respectivement par sections dans des positions différentes par rapport à la direction axiale.

7. Dispositif selon l'une quelconque des revendications 3 à 6, caractérisé en ce que le convoyeur intermédiaire (18) est monté dans un carter (33) qui comprend des parois latérales (34, 34') qui suivent au moins grossièrement le contour du convoyeur intermédiaire (18) et qui forment un passage (35, 35') sensiblement régulier entre les parois latérales (34 et 34') et le convoyeur intermédiaire (18).

8. Dispositif selon l'une quelconque des revendications 3 à 7, caractérisé en ce que sont fixés dans le passage (35, 35') et sur les parois latérales (34, 34') plusieurs éléments de guidage (55) s'étendant en direction axiale et disposés à distance les uns des autres, constitués de préférence par des barres profilées carrées qui s'étendent au moins en partie dans le passage (35, 35').

9. Dispositif selon la revendication 7 ou 8, caractérisé en ce que sont prévus des outils de déchiquetage complémentaire (36) sur la paroi latérale (34) du côté où le convoyeur intermédiaire (18) effectue un transport vers le bas en direction de la partie transporteuse (13), outils qui peuvent être montés dans une ouverture (37) de la paroi latérale (34), qui sont constitués par des organes de coupe ou d'arrachement (65) ou par des organes de broyage (64) qui coopèrent avec la périphérie (38) du convoyeur intermédiaire (18), de préférence sur la totalité de sa longueur axiale (25), et de préférence avec des contre-outils montés sur ce convoyeur intermédiaire.

10. Dispositif selon l'une quelconque des revendications 7 à 9, caractérisé en ce que les outils de déchiquetage complémentaire (36) sont montés en étant rassemblés sur un élément rapporté (39).

11. Dispositif selon l'une quelconque des revendications 7 à 10, caractérisé en ce que les outils de déchiquetage complémentaire (36) pénètrent dans la région externe de la périphérie (38) du convoyeur intermédiaire (18) dans des évidements (40) des éléments d'entraînement (30).

12. Dispositif selon l'une quelconque des revendications 7 à 11, caractérisé en ce que les outils de déchiquetage complémentaire (36) forment avec la périphérie (38) du convoyeur intermédiaire (18) un passage réglable (35) qui est plus petit, et de préférence sensiblement plus petit, que la dimension des particules du papier de rebut (7) déchiqueté par le dispositif de déchiquetage (10).

13. Dispositif selon la revendication 10, caractérisé en ce que l'élément rapporté (39) est monté sur la paroi latérale (34) à l'encontre de la force d'un ressort pour venir se dégager du passage (35) et peut être monté dans la paroi latérale (34) de préférence avec divers outils (36) de déchiquetage complémentaire pouvant être remplacés au choix.

14. Dispositif selon l'une quelconque des revendications 7 à 9, caractérisé en ce que des racles (49) destinées au papier de rebut (7) sont montées sur la paroi latérale (34'), sur le côté où le convoyeur intermédiaire (18) effectue son transport vers le haut.

15. Dispositif selon la revendication 3, caractérisé en ce que l'extrudeuse (11) comprend une auge (14) qui est fixée au moins par quelques boulons (42) au châssis (43) sur lequel est monté le carter (33) du convoyeur intermédiaire (18), dont les parois latérales (34, 34') sont également fixées par quelques boulons (44) au châssis (43) de manière que la vis (12) et/ou le convoyeur intermédiaire (18) soient d'accès facile.

16. Dispositif selon l'une quelconque des revendications 7 à 9, ou 15, caractérisé en ce qu'une buse (54) destinée à pulvériser une partie (6) de l'eau ajoutée (5) est montée dans la paroi latérale (34) sur le côté où le convoyeur intermédiaire (18) effectue son transport en direction de la vis (12), avant ou entre les outils de déchiquetage complémentaire (36).

17. Dispositif selon la revendication 1 ou 16, caractérisé en ce qu'une buse (17) destinée à pulvériser l'eau ajoutée (5) est vissée dans la paroi de l'auge (14) de la vis à proximité de l'extrémité de la partie transporteuse (16) de la vis (12), avant l'élément de sortie conique (16) et dans la région supérieure de la partie transporteuse (13).

18. Dispositif selon l'une quelconque des revendications 3 à 7, 9 ou 11 à 13 ou 15 à 18, caractérisé en ce que le convoyeur intermédiaire (18) est muni d'éléments d'entraînement partiels (32) qui sont montés sur le corps (31) à distance les uns des autres en formant en direction axiale du convoyeur intermédiaire (18) un passage radial (68) pour les outils (36) de déchiquetage complémentaire sur le trajet qu'ils suivent.

19. Dispositif selon la revendication 18, caractérisé en ce que les éléments d'entraînement partiels (32) sont montés sur plusieurs rangées (69, 69') orientées en direction axiale et réparties régulièrement sur le corps (31), deux rangées avec des éléments d'entraînement partiels (32) opposés les uns aux autres étant de préférence décalées alternativement en direction axiale de 90° et leurs surfaces (56) étant orientées en étant tournées en direction axiale.

20. Dispositif selon la revendication 18 ou 19, caractérisé en ce que chaque élément d'entraînement partiel (32) est constitué en deux parties (70, 70'), ou constitués par un élément plié, qui est ou sont vissés ou soudés par une surface de fixation (71) qui est adaptée au corps (31).

21. Dispositif selon la revendication 9, caractérisé en ce que les organes de coupe ou d'arrachement (65) s'étendent jusqu'au corps (31) alors que leurs arêtes de coupe (73) forment un angle de cisaillement avec les bords longitudinaux (72) des éléments d'entraînement partiels (32), angle qui s'ouvre en direction du corps (31).

22. Dispositif selon la revendication 9 ou 21, caractérisé en ce que les organes de coupe ou d'arrachement (65) s'étendent par leur arête de coupe (73) sensiblement tangentiellement à la périphérie du corps (31) jusqu'à la périphérie externe (9) de la vis (12) de l'extrudeuse (11) et jusqu'à un faible interstice de coupe (75) qu'ils forment, et s'étendent avec la lame de coupe (74) de préférence sensiblement à travers le passage (35) ou sur la distance allant jusqu'à la paroi du carter de l'auge (14) de la vis.

23. Dispositif selon la revendication 21 ou 22, caractérisé en ce que sont prévues plusieurs rangées d'organes de coupe ou d'arrachement (65) qui sont également décalées en direction du transport (52).
